# EUROPEAN PATENT SPECIFICATION

(11) **EP 0 686 549 B1**
(45) Date of publication and mention of the grant of the patent: **04.03.1998**
(21) Application number: 95107980.5
(22) Date of filing: 24.05.1995
(51) Int. Cl.: B62M 23/02, B60K 1/04

(54) **Charging connector mounting structure of motor-assisted bicycle**
Anordnung des Steckers zum Aufladen der Batterien von Fahrrädern mit Hilfsmotor
Disposition d'un connecteur pour la charge de batterie de bicyclette avec moteur auxiliaire

(30) Priority: 11.06.1994 JP 152722/94
(43) Date of publication of application: 13.12.1995
(73) Proprietor: HONDA GIKEN KOGYO KABUSHIKI KAISHA, Minato-ku, Tokyo (JP)
(72) Inventor: Iguchi, Hiroaki, c/o K.K. Honda Gijutsu Kenkyusho, Wako-shi, Saitama (JP); Yamaguchi, Masaaki, c/o K.K. Honda Gijutsu Kenk., Wako-shi, Saitama (JP)
(74) Representative: Liska, Horst, Dr.-Ing.

(56) References cited:
- EP-A- 0 636 536
- PATENT ABSTRACTS OF JAPAN, unexamined applications, M field, vol. 18, no. 136, 07 March 1994, THE PATENT OFFICE JAPANESE GOVERNMENT page 24 M 1572; & JP-A-05 319 104 (YAMAHA)

## Description

### Detailed Description of the Invention

### Industrial Field of Utilization

The present invention relates to a motor-assisted bicycle utilizing a power of a motor mounted on a bicycle to assist human-power operation and, more particularly, to a battery charging connector mounting structure of the battery which supplies the electric power to the motor.

### Prior Art

A motor-assisted bicycle is mounted with a motor interposed in connection with a power transmission system which transmits a pedal pressure to a wheel, and controls the output of the motor in accordance with the pedal pressure and is mounted with a battery to supply the electric power to the motor.

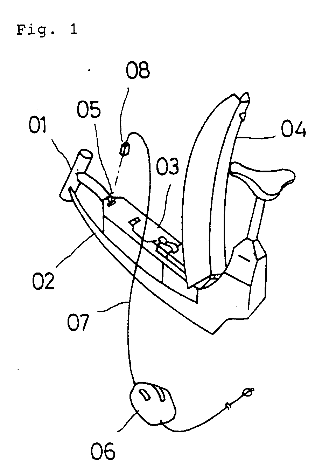

Fig. 1 is a perspective view of a major portion which gives an example described in Japanese Patent-A-5 319 104, showing the condition for charging the battery without removing a battery case from the vehicle body.

As shown in Fig. 1, there is installed a long battery case 03 with the battery built in, along a down frame 02 extending downward to the rear from a head pipe 01; an openable upper cover 04 is swung to open upward; and a plug 08 at the forward end of a battery charging connector cable 07 extending from the charger 06 side is connected to a battery charging connector 05 for charging which is mounted at the upper end of the front part of the battery case 03.

### Problem to be Solved by the Invention

Therefore, the prior art bicycle has such a disadvantage that since the bicycle can be run by pedaling even when the plug 08 on the charger 06 side connected to the battery charging connector 05 of the battery case 03 is in a charging condition, accidental or useless operation of the motor will occur.

In view of the above-described disadvantage, it is an object of the present invention to provide a battery charging connector mounting structure of a motor-assisted bicycle which can not be run by pedaling when the battery is charged with the battery case mounted.

### Means for Solving the Problem, and Function

To accomplish the above-described object, the present invention provides, a motor-assisted bicycle comprising
a pedal crank to be driven by human power,
an electric motor to assist human power by motor power,
a battery case for containing a battery for supplying electric power to said motor, said battery case being disposed adjacently to a support section of said pedal crank,
a battery charging connector (hereinafter also called "charging connector") held on a connector mounting structure, characterized in that said battery charging connector is mounted with a connecting part set to a path of rotation of one crank arm of said pedal crank along a side surface of said battery case.

Since the connecting part of the charging connector is set on the path of rotation of the crank arm with the battery case mounted on the vehicle body, the charging connector cable protrudes out sideward from the charging connector when the connector on the charger side is connected to the connecting part of the charging connector, interfering with the path of rotation of the crank arm; therefore it becomes impossible to drive the bicycle by pedaling, thereby preventing driving the bicycle with the charging connector cable connected.

### Brief Description of the Drawings

Fig. 1 is a general side view of a conventional motor-assisted bicycle.

Fig. 2 is a general side view of one embodiment of a motor-assisted bicycle according to the present invention.

Fig. 3 is an exploded perspective view of a body cover of the motor-assisted bicycle.

Fig. 4 is a side view of a side cover.

Fig. 5 is a top view of the same.

Fig. 6 is a sectional view taken along line VI-VI in Figs. 4 and 5.

Fig. 7 is a sectional view taken along line VII-VII in Figs. 4 and 5.

Fig. 8 is a sectional view taken along line VIII-VIII in Fig. 4.

Fig. 9 is a side view of a center cover.

Fig. 10 is a view on arrow X in Fig. 9.

Fig. 11 is a side view of a battery case with a body cover formed by assembling the side cover and the center cover.

Fig. 12 is a side view showing the state of the battery case mounted to the body cover.

Fig. 13 is a view on arrow XIII of Fig. 12.

Fig. 14 is a top view of a discharging connector.

Fig. 15 is a rear view of the same.

Fig. 16 is a sectional view taken along line XVI-XVI in Fig. 15.

Fig. 17 is a top view of the connector on the body cover side.

Fig. 18 is a rear view of the same.

Fig. 19 is a sectional view taken along line XIX-XIX in Fig. 18.

Fig. 20 is a sectional view of the rear part of the battery case and the lower part of the center case.

Fig. 21 is a top view of the rear part of the lower battery case.

Fig. 22 is a side view, partly cut out in section, of the front part of the battery case in the vicinity of a head pipe.

### Preferred Embodiment

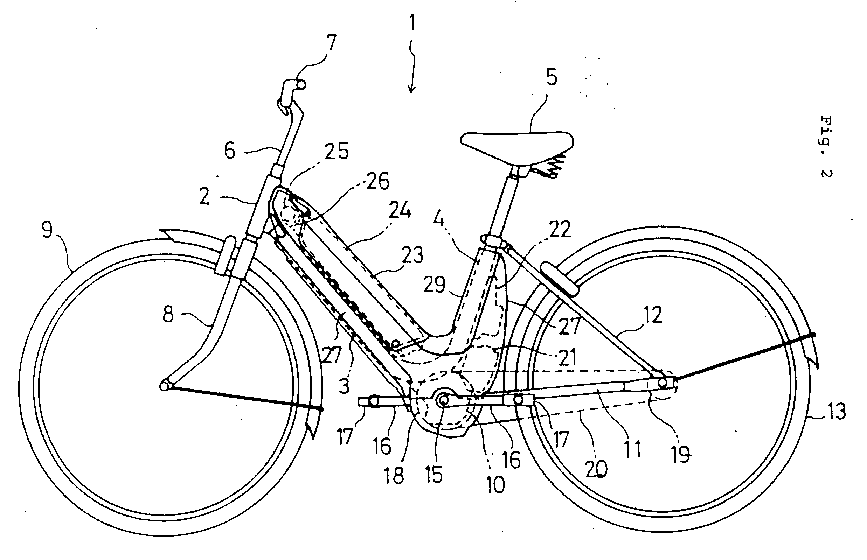

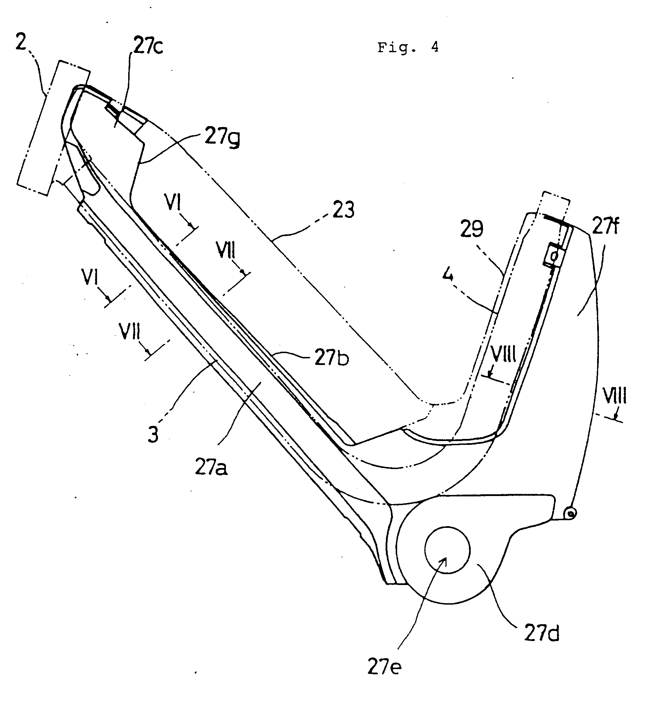

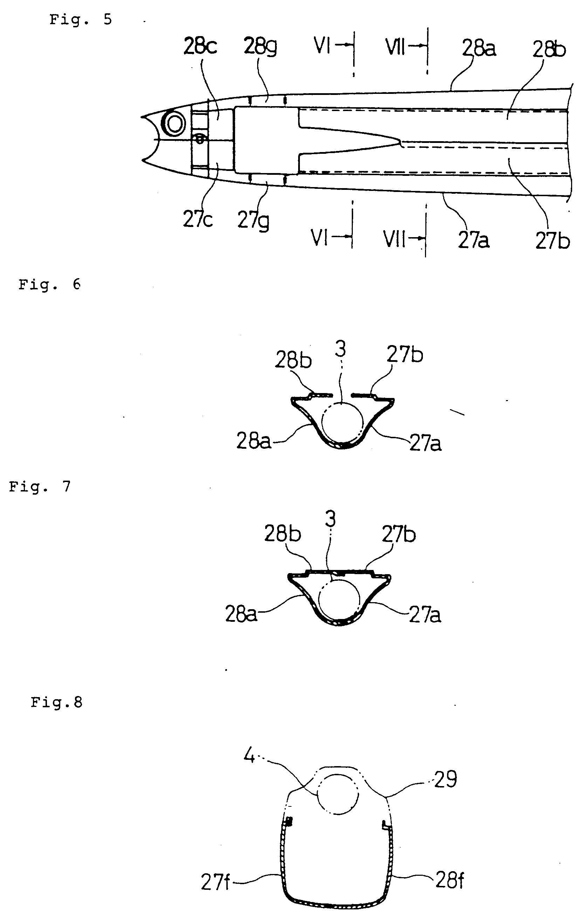

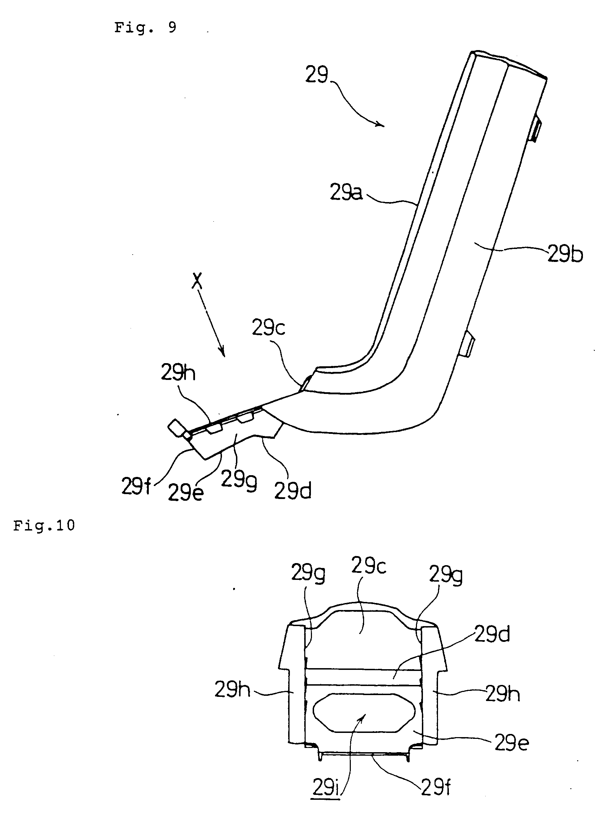

One embodiment of the present invention illustrated in Figs. 2 to 22 will be explained.

Fig. 2 is a general side view of the motor-assisted bicycle 1 of the present embodiment.

In the motor-assisted bicycle 1, the downtube 3 projects downward to the rear from the head pipe 2 and at the bottom end of the downtube 3 a seat tube 4 is curved upward and extends toward a seat 5, thus constituting a V-shaped main frame.

At the top end of a steering shaft 6 rotatably pivoted on a head pipe 2, a rod-like handlebar 7 is supported, and a front wheel 9 is supported on the bottom end of a pair of front forks 8 integrally extending to the lower part of the steering shaft 6.

At the V-shaped bottom end part where the downtube 3 and the seat tube 4 meet, there is suspended a gear box 10 for holding a gear mechanism. In this gear box 10 a rear fork 11 secured at the front end part extends rearward; the rear fork 11 being reinforced with a stay 12 mounted between the rear end thereof and the seat tube 4. At the rear end of the rear fork 11 is supported a rear wheel 13.

The gear box 10 serves also as a crankcase and rotatably support the crank shaft 15. The crank shaft 15 has crank arms 16, 16 on both the right and left ends, and pedals 17, 17 are mounted on the forward ends of the crank arms 16, 16.

A chain 20 is installed between a driving sprocket 18 which rotates with the rotation of the crankshaft 15 and a driven sprocket 19 provided on a rear wheel 13. When the crankshaft 15 is rotated with the pedal pressure applied to the pedals 17, 17, the rear wheel 13 turns through the driving sprocket 18, the chain 20, and the driven sprocket 19, thus propelling the bicycle.

In the meantime, a motor 21 is fixedly mounted in the gear box 10 along the seat tube 4; the driving power of the motor 21, after reduction by a gear mechanism, is transmitted to the crankshaft 15 to assist the human power.

On the rear side surface of the seat tube 4 and above the motor 21 is mounted such a control device 22 including an electronic control unit and a motor driver for controlling the drive of the motor 21.

The downtube 3 and the seat tube 4 are covered with a side cover 27 and a center cover 28 which are divided to the right and left parts in a V-letter form. On the inclined upper surface of the side cover 27 which covers the downtube 3, a long battery case 23 is removably mounted on the inclined upper surface of the side cover 27 covering the downtube 3, and the battery case 23 itself constitutes a part of the outside surface of the body.

In the battery case 23 is installed a battery 24 for driving which is provided with a plurality of Ni-Cd batteries for supplying the electric power to the motor 21.

At the front of the battery case 23 is provided the combination switch 25, which serves also to drive the locking device 26 for locking the battery case 23.

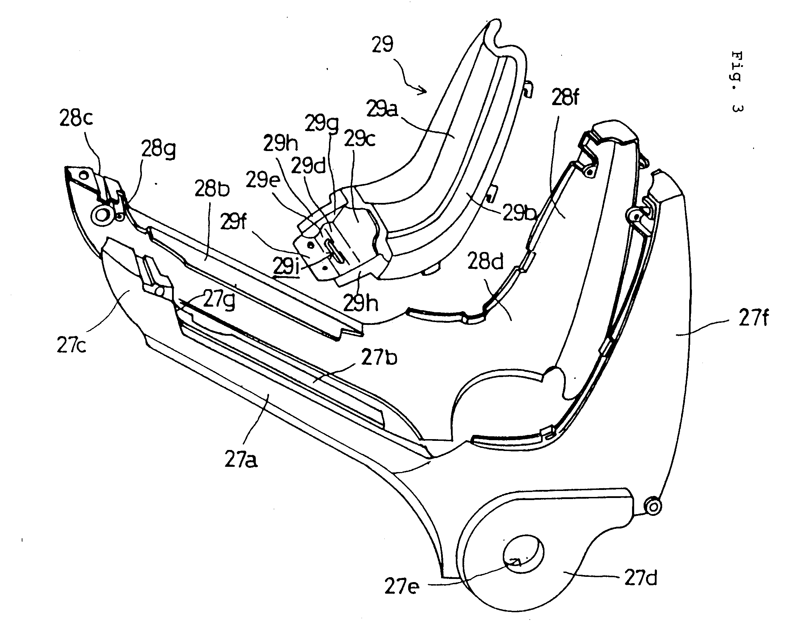

Details of the side covers 27 and 28 and the center cover 29 in the above-described motor-assisted bicycle 1 will be explained with reference to Figs. 3 to 10.

The side covers 27 and 28 are formed approximately symmetrically in a V-shape as viewed from the side. In the front half part, side wall sections 27a and 28a which cover the side of the downtube 3 from below and flat upper walls 27b and 28b which cover the upper part of the downtube 3 extend long; the front end parts 27c and 28c swell upward to enclose the rear part of the head pipe 2, thereby forming a space for mounting the combination switch 25 and the locking device 26 at the rear of the head pipe 2.

The upper walls 27b and 28b are cut out at the front to provide a space between these walls and the front end parts 27c and 28c, and inclined walls 27g and 28g are formed in connection with the front end parts 27c and 28c swelling to the side of the space.

The V-shaped lowermost part of the side covers 27 and 28 have central side wall sections 27d and 28d covering the side of the gear box 10; the central side wall section 27d on the left side is provided with a round hole 27e through which the crankshaft 15 is inserted.

At the rear part of the side covers 27 and 28 are formed rear wall sections 27f and 28f which are curved to cover the rear part of the seat tube 4, and between the seat tube 4 and the rear wall sections 27f and 28f is formed a space for housing the motor 21, the control device 22, etc.

The center cover 29 covering the front of the seat tube 4 is vertically long one curved at the lower part and is of a J-shape as viewed from the side as shown in Figs. 3, 9 and 10. At the center in a lateral direction is formed a vertically long ridge 29a bulged out forward along the seat tube 4; from the ridge 29a, the right and left side walls 29b, 29b extend while curving rearward, meeting the right and left front edges of the rear wall sections 27f and 28f of the side covers 27 and 28.

At the lower part of the center cover 29, the J-shaped forward end surface has bottom walls 29c, 29d, 29e and 29f inclined in four specific stages and extends downward; and on the right and left sides of the bottom walls 29c, 29d, 29e and 29f are formed vertical side walls 29g, 29g to form a recess of specific shape.

The upper edge of the vertical side walls 29g, 29g is bent outward to the right and left to thereby form flanges 29h, 29h.

Of the above-described bottom walls, the upper bottom wall 29c forms a specific sharply inclined surface, passing through a nearly horizontal bottom wall 29d, while the lower bottom wall 29e forms a gently inclined surface, having a large opening 29i at center. Further, there is provided a reversely inclined front end bottom wall 29f in connection with the lower bottom wall 29e.

The right and left side covers 27 and 28, when assembled with the main frame enclosed inside, cover the downtube 3 at the front half section, with the flat upper walls 27b and 28b forming inclined surface along the downtube 3; and the rear wall sections 27e and 28e cover the rear part of the seat tube 4 at a space.

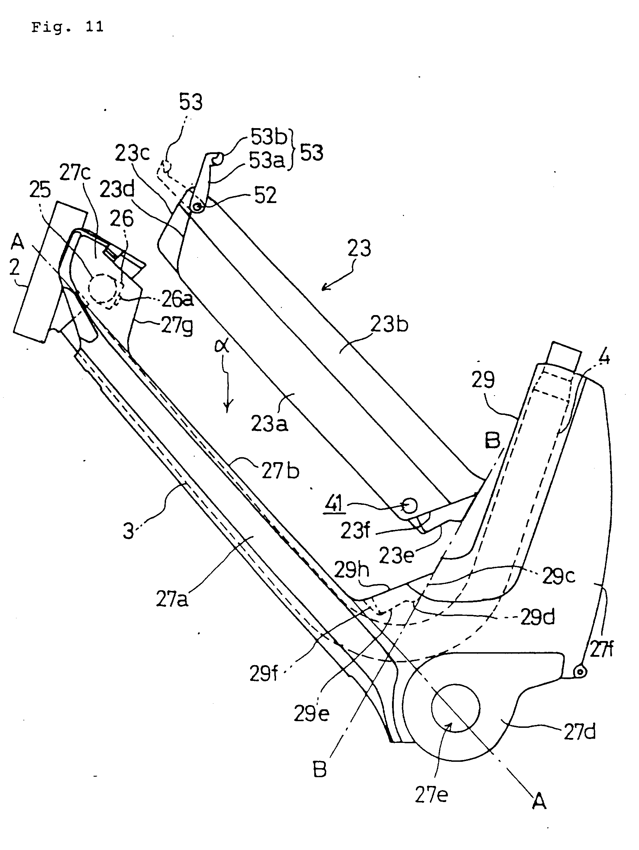

The front part of the seat tube 4 is covered with the center cover 29. When the right and left side walls 29b, 29b of the center cover 29 are assembled so as to continue to the rear wall sections 27e and 28e of the side covers 27 and 28, the front end parts 27c and 28c of the inclined long flat upper walls 27b and 28b of the side covers 27 and 28 swell upward as shown in Fig. 11; at the rear end a recess is formed by the bottom walls 29c, 29d, 29e, and 29f at the lower part of the center cover 29; the flanges 29h, 29h constitute an upward inclined surface to form a long recess α as viewed from the side, thereby enabling fitting to support the battery case 23.

Particularly, of the bottom walls 29c, 29d, 29e and 29f supporting the rear end of the battery case 23, the inclined surface B-B of the upper bottom wall 29c makes a sharp inclined angle near a perpendicular from a right angle in relation to the inclined surface A-A of the long flat upper walls 27b and 28b as shown in Fig. 11.

In the meantime, the battery case 23 is a long rectangular tubular box which is split into two halves, upper and lower. The lower half 23a of the box is housed in the battery 24 and covered with the upper cover 23b.

The battery case 23 is of such a design that at the front part the central front wall 23c swells out slightly forward from the right and left front walls 23d; and similarly at the rear part the central rear wall 23e swells out slightly rearward from the right and left rear walls 23f.

The inclined surfaces of the right and left front walls 23d and the right and left rear walls 23f coincide with the front inner surface (the inclined walls 27g and 28g) and the rear inner surface (the flanges 29h, 29h) of the recess α formed by the side covers 27 and 28 and the center cover 29; the central rear wall 23e has an inclined surface of the same shape as the bottom walls 29c, 29d and 29e in the lower part of the center cover 29.

The bottom wall 29f at the lower front end of the center cover 29 is in parallel with the lower surface of the battery case 23.

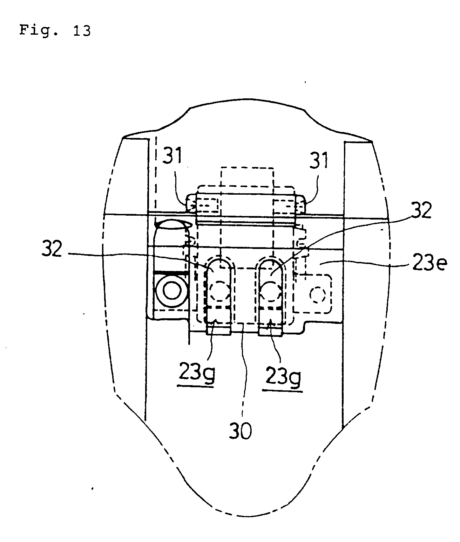

The central rear wall 23e of the battery case 23 is provided with a pair of long holes 23g, 23g, right and left, in a part corresponding to the bottom wall 29e of the center cover 29 as illustrated in Fig. 13.

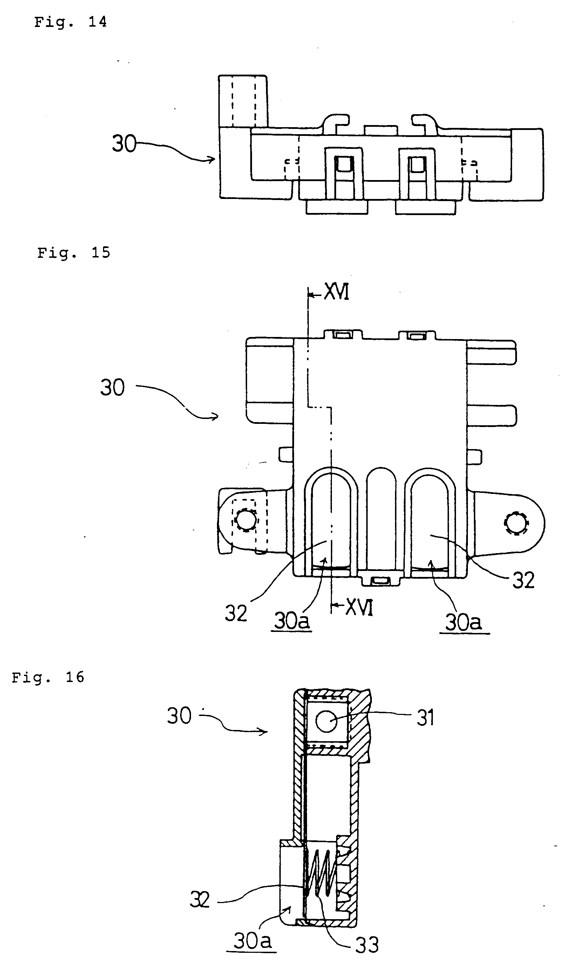

Inside the central rear wall 23e of the battery case 23, a discharging connector 30 is secured. This discharging connector 30 is fitted with a pair of elastic terminal pieces 32, 32, right and left, produced of a copper alloy plate which are suspended and secured at the top end by a screw 31 as shown in Figs. 14 to 16. In the lower part thereof, a spring 33 is interposed to press rearward. The pair of terminal pieces 32, 32 have openings 30a, 30a in the lower rear part. The openings 30a, 30a correspond to the pair of long holes 23g, 23g of the central rear wall 23e of the battery case 23 (see Fig. 13).

Therefore, in the central rear wall 23e of the battery case 23, the terminals 32, 32 are exposed in a pair of long holes 23g, 23g.

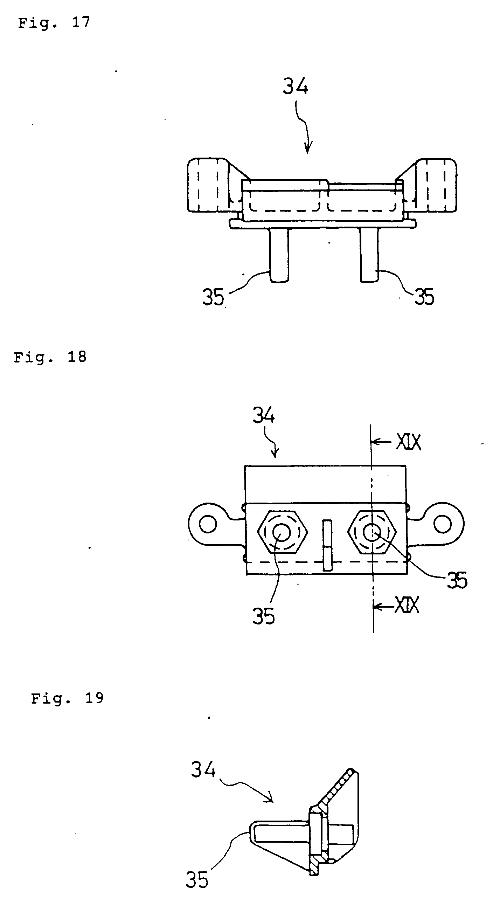

In the meantime, on the bottom wall 29e side of the center cover 29, a connector 34 is installed in the opening 29i thereof; the connector 34 has a pair of rod-like terminals 35, 35, right and left, protruding forward as shown in Figs. 17 to 19. The pair of terminals 35, 35 correspond to a pair of terminal pieces 32, 32 on the battery case 23 side.

Therefore, when the central rear wall 23e of the battery case 23 fits in the recess in the lower part of the center cover 29, a pair of terminals 35, 35 of the connector 34 go through the long holes 23g, 23g and the openings 30a, 30a, to thereby push the pair of terminal pieces 32, 32 of the discharging connector 30 against the spring 33, thus accomplishing electrical connection.

The screws 31, 31 for fixing the terminal pieces 32, 32 of the discharging connector 30 at the top end thereof connect the ends of positive and negative power cords 36 and 37 extending from the battery 24.

To the discharging connector 30, a fuse 38 is releasably connected and supported.

At the inner lower part of the left rear wall 23f at the rear part of the battery case 23, a charging connector 40 is fixed with the connecting part directed to the left; and there is formed a round hole 41 in the battery case 23 which corresponds to the connecting part of the discharging connector 40.

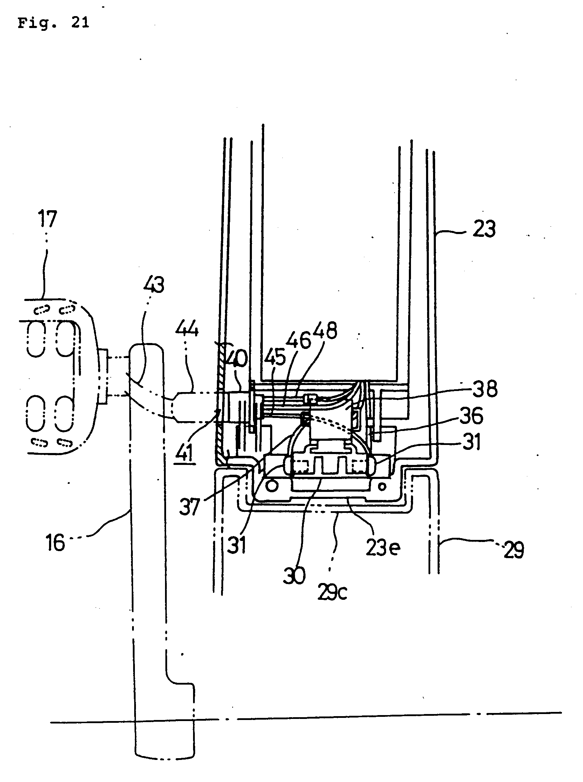

Therefore, it is possible to charge the battery with the battery case 23 as-installed on the vehicle body, by connecting the battery to the connecting part of the charging connector 40 by inserting a plug 44 fitted on the forward end of a charging connector cable 43 extending from the charger, into the round hole 41 provided in the rear part of the battery case 23 (see Fig. 21).

To the charging connector 40 are connected positive and negative power cords 45 and 46 from the battery 24 and a signal cord 48 for outputting a temperature detection signal from a thermistor which is disposed within the battery case 23.

Therefore the charging connector cable 43 also has positive and negative power lines and a temperature signal line and is provided with a temperature control circuit on the charger side to thereby control to prevent charging in the event that the interior of the battery case 23 has exceeded a specific temperature.

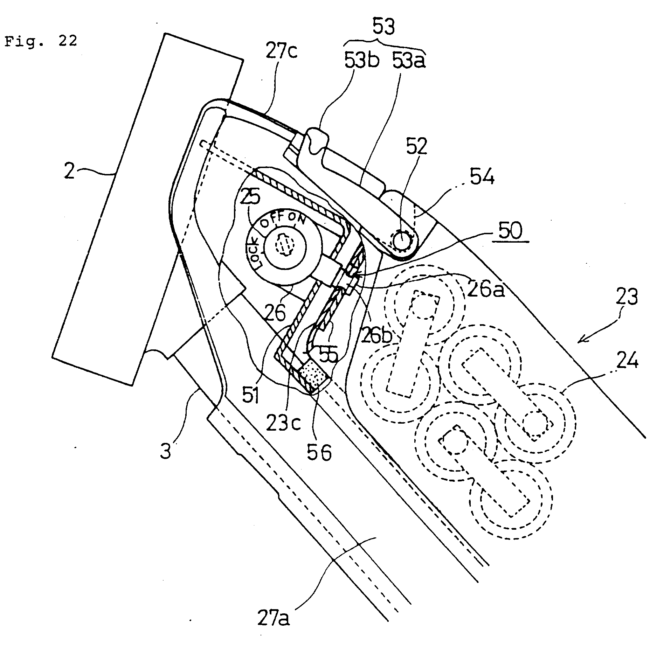

In the meantime, at the front part of the battery case 23, a plate 55 which is a part of a supporting bracket for supporting the handle 53 described later is attached inside the central front wall 23c as shown in Fig. 22, and a little long lock hole 50 is formed through the central front wall 23c and a plate 55. Also, the locking device 26 is fixedly mounted on a supporting bracket 51 mounted within the front end parts 27c and 28c swelling upward at the front part of the side covers 27 and 28, so that when the withdrawable lock pin 26a of the locking device 26 projects out to the rear and into the lock hole 50 of the central front wall 23c of the battery case 23 and a plate 55, thereby locking the front part of the battery case 23.

The lower end of the supporting bracket for supporting the locking device 26 is curved rearward to extend as far as the position receiving the lower surface of the front end part of the battery case 23. On the upper surface of the curved portion is fixed a rubber 56, which is pressed by the lower surface of the front end part of the battery case 23 to thereby mount the battery case 23.

The lock pin 26a has a groove 26b formed circumferentially in the vicinity of the point, so that the lower peripheral edge portion of the lock hole 50 will fit in the groove 26b after being fitted in the lock hole 50.

That is, when the battery case 23 is to be mounted, the front end part of the battery case 23 fitted in a specific position of the body case is pushed down a little to elastically deform the rubber 56; in this state, the locking device 26 is operated by a key to insert the lock pin 26a into the lock hole 50 on the battery case 23 side. With unlocking of the battery case 23 from a pressed-down position, the lower peripheral edge of the lock hole 50 comes to fit in the groove 26b with the elasticity of the rubber 56, thus locking the battery case 23 fully to thereby enable to prevent the battery case 23 from loosening.

Therefore, the lock pin 26 remains unmoved without unlocking with the lower peripheral edge part of the lock hole 50 fitted in the groove 26b if operated for unlocking by the key of the locking device 26 alone. When the key is operated, with the front part of the battery case 23 pressed down to release the groove 26b of the lock pin 26a from the lower peripheral edge part of the lock hole 50, the lock pin 26a comes out of the lock hole 50 to enable unlocking.

The locking device 26 is driven by the combination switch 25 located on the right thereof, and the key is inserted into the key hole directed to the right of the combination switch 25 to turn on the main switch, thus enabling to accomplish locking and unlocking.

That is, as shown in Fig. 22, the key has three positions: ON, OFF and LOCK. In the ON position is done an electrical power assistance, in which the lock pin 26a is in a protruded position. In the OFF position no electric power assistance is performed and therefore the lock pin 26a is also in the protruded position. The LOCK position is an unlocking position, in which the lock pin 26a is in a withdrawn position and no electrical power assistance is carried out.

The key is set in the LOCK position only when the battery case 23 is mounted and removed; usually in the OFF or ON position, the battery case 23 is mounted in a locked state. The key is set to ON when motor assistance is required, and to OFF when propelling the bicycle like an ordinary bicycle without motor assistance or when stopping the bicycle.

At the front part of the battery case 23, the handle 53 pivotally supported by a pin 52 at the upper end part is vertically swingably provided.

The handle 53 is pivotally supported by the pin 52 at the base end of the right and left arm sections 53a, 53a; the forward end of the arm sections 53a, 53a is connected by a connecting bar 53b, and is pressed toward swinging down by a torsion spring 54.

Consequently, the handle 53 is raised by holding and pulling up the connecting bar 53b thereof to facilitate removal of the battery case 23. In normal mounting of the battery case 23, the handle 53 is kept in a down position by means of the torsion spring 54.

The battery case 23, when mounted to the body cover including the side covers 27 and 28 and the center cover 29, the battery case 23, as shown in Fig. 11, is placed in parallel with the inclined surface A-A of the long flat upper walls 27b and 28b of the side covers 27 and 28, and then, with the central rear wall 23e of the battery case 23 aligned with the inclined surface B-B of the upper bottom wall 29c of the center cover 29, the battery case 23 is moved parallelly along the inclined surface B-B, thus being fitted in the body cover.

Otherwise, the rear part of the battery case 23 is aligned with the lower part of the center cover 29 and subsequently the front part of the battery case 23 is swung downward to the front to fit to the body cover.

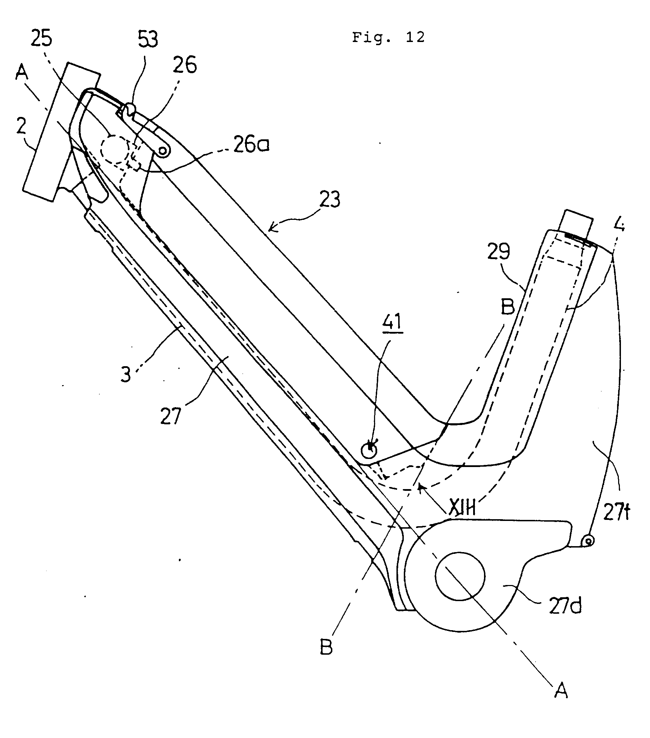

In any case, at the rear part of the battery case 23, the central rear wall 23e is guided to fit in the recess formed by the bottom walls 29c, 29d, 29e and 29f in the lower part of the center cover 29 and the right and left vertical side walls 29g, thereby determining the longitudinal and lateral positions. Then, the central front wall 23c at the front part of the battery case fits in between the right and left inclined walls 27g and 28g of the front end parts 27c and 28c of the side covers 27 and 28; the lower surface of the battery case 23 contacts the upper walls 27b and 28b; the right and left front walls 23d, 23d contact the right and left inclined walls 27g and 28g at the front; and the right and left rear walls 23f, 23f contact the right and left flanges 29h, 29h at the rear, thereby supporting the battery case 23 in the body cover as shown in Fig. 12.

With the front part of the battery case 23 pushed down a little as described above, a key is inserted into the combination switch 25 and then is turned to lock (from LOCK position to OFF position), in which the lock pin 26a protrudes out and goes into the lock hole 50 of the central front wall 23c of the battery case 23, to thereby release the battery case 23 from a press-down pressure. Then the lower peripheral edge of the lock hole 50 fits in the groove 26b of the lock pin 26a, thus preventing the battery case 23 from loosening off from the locked position.

As shown in Fig. 12, the lock pin 26a fits in the lock hole 50 to lock the battery case 23. In this state, the front part of the battery case 23 naturally can not be removed upward and the rear part of the battery case can neither be removed upward.

That is, removing the rear part of the battery case 23 upward swings the battery case 23 upward on the center of the engaging section of the lock pin 26a. However, since the inclined surface B-B of the bottom wall 29c of the lower part of the center cover 29 forms a sharp slope close to a perpendicular, the central rear wall 23e of the battery case 23 which swings on the center of the engaging section of the lock pin 26a contacts the bottom wall 29c of the inclined surface B-B, being prevented from swinging. Therefore the rear part of the battery case 23 can not be removed upward.

Accordingly, the battery case 23 is completely locked to prevent its removal by engaging the lock pin 26a of the locking device 26; this operation can be accomplished with ease.

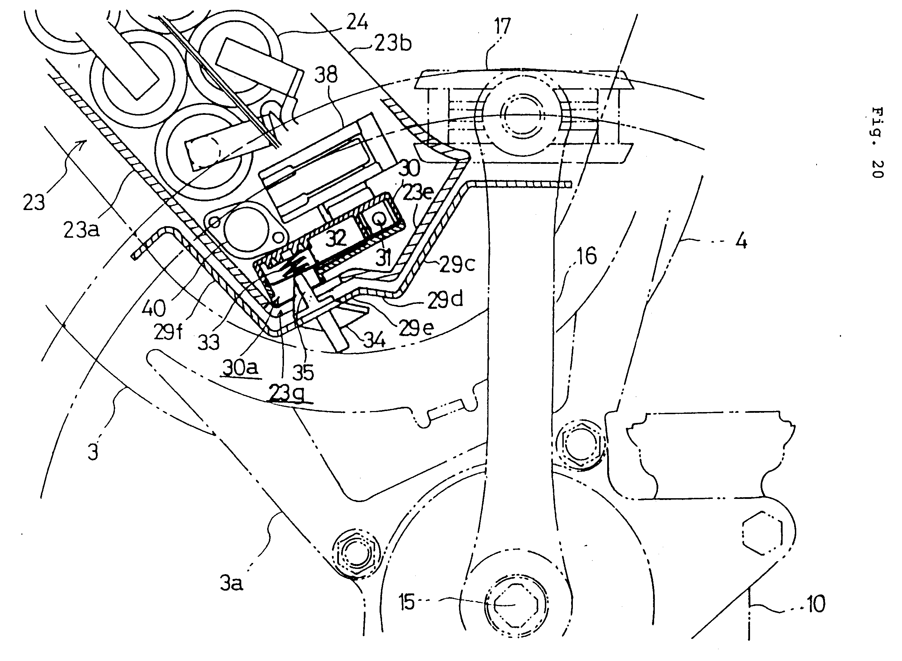

In the state that the battery case 23 is thus mounted and locked to the body cover, it is possible to charge the battery 24. With the battery case 23 mounted, as shown in Figs. 20 and 21, the connecting section of the charging connector 40 and the round hole 41 of the battery case 23 are exposed to the path of rotation of the left-hand crank arm 16, and therefore the charging connector cable 43 will interfere with the path of rotation of the crank arm 16 as shown in Fig. 21 if the plug 44 at the forward end of the charging connector cable 43 is connected with the charging connector 40.

Therefore, when the battery is charged with the battery case 23 as mounted on the vehicle body, the crank arm 16 will not rotate because of the interference of the charging connector 43 if one tries to rotate the crank arm 16 by the pedals 17. It is therefore possible to prevent driving the bicycle with the charging connector cable 43 left as connected.

With the front part of the battery case 23 pushed down a little, the locking device 26 is operated by the key and the lock pin 26a is pulled out of the lock hole 50 of the central front wall 23c of the battery case 23, and then as the handle 53 is raised and gripped to rise, the battery case 23 can easily be removed. It is, therefore, possible to charge the battery with the battery case 23 off the bicycle.

### Effect of the Invention

According to the present invention, since the connecting section of the charging connector is exposed to the path of rotation of the crank arm with the battery case mounted on the vehicle body, the charging connector cable will protrude out to the side from the charging connector if the connector on the charger side is connected to the connecting section of the charging connector, interfering with the path of rotation of the crank arm. It therefore becomes impossible to propel the bicycle by pedaling, thereby preventing driving with the charging connector cable connected.

Summarized the object of the present invention is to provide a charging connector mounting structure of a motor-assisted bicycle which can not be propelled by pedaling during charge with a battery case mounted on a vehicle body.

In a motor-assisted bicycle using a motor power to assist human power wherein a battery case 23 for housing a battery which supplies the power to the motor is disposed adjacently to the pedal crank support section, a charging connector mounting structure of the motor-assisted bicycle has a charging connector disposed with its connecting section exposed to the path of rotation of one crank arm 16 which rotates along the side surface of the battery case 23.

## Claims

1. A motor-assisted bicycle (1) comprising
a pedal crank (15, 16) to be driven by human power,
an electric motor (21) to assist human power by motor power,
a battery case (23) for containing a battery (24) for supplying electric power to said motor (21), said battery case (23) being disposed adjacently to a support section of said pedal crank (15, 16),
a battery charging connector (40) held on a connector mounting structure, characterized in that said battery charging connector (40) is mounted with a connecting part set next to a path of rotation of one crank arm (16) of said pedal crank (15, 16) along a side surface of said battery case (23).

## Patentansprüche

1. Motorunterstütztes Fahrrad (1), umfassend:
- eine durch Muskelkraft anzutreibende Tretkurbel (15, 16),
- einen Elektromotor (21) zum Unterstützen der Muskelkraft durch Motorkraft,
- ein Batteriegehäuse (23) zur Aufnahme einer Batterie (24) zum Zuführen elektrischer Energie zum Motor (21), wobei das Batteriegehäuse (23) benachbart zu einem Halteabschnitt der Tretkurbel (15, 16) angeordnet ist,
- ein an einem Anschlußteil-Anbringaufbau gehaltenes Batterieaufladeanschlußteil (40),
**dadurch gekennzeichnet,**
daß das Batterieaufladeanschlußteil (40) mit einem Verbindungsteil angebracht ist, welches nahe eines Rotationswegs eines Kurbelhebels (16) der Tretkurbel (15, 16) längs einer Seitenfläche des Batteriegehäuses (23) angeordnet ist.

## Revendications

1. Bicyclette à moteur auxiliaire (1) comprenant
une manivelle de pédalier (15, 16) destinée à être entraînée par une force humaine,
un moteur électrique (21) permettant à une puissance de moteur d'assister la force humaine,
un carter de batterie (23) destiné à renfermer une batterie (24) permettant de délivrer une puissance électrique audit moteur (21), ledit carter de batterie (23) étant disposé à proximité d'une section de support de ladite manivelle de pédalier (15, 16),
un connecteur de chargement de batterie (40) maintenu sur une structure de fixation de connecteur,
caractérisée en ce que ledit connecteur de chargement de batterie (40) est monté avec une pièce de connexion fixée sur un chemin de rotation d'un bras de manivelle (16) de ladite manivelle de pédalier (15, 16) le long d'une surface latérale dudit carter de batterie (23).
